# EUROPÄISCHE PATENTANMELDUNG

(11) **EP 0 997 752 A1**
(43) Veröffentlichungstag der Anmeldung: **03.05.2000**
(21) Anmeldenummer: 98120233.6
(22) Anmeldetag: 26.10.1998
(51) Int. Cl.: G02B 6/38, H01R 31/00

(54) **Optisches oder elektrisches Modul, insbesondere Buchsenteil für eine Steckverbindung**

(71) Anmelder: Diamond SA, 6616 Losone (CH)
(72) Erfinder: De Marchi, Silverio, 6612 Ascona (CH)
(74) Vertreter: Wenger, René

(57) **Zusammenfassung**

Das Modul (1) ist mit einem auf zwei Gehäuseseiten offenen Schlitz (4) zur Aufnahme eines flächigen Halteabschnitts (5) einer Halterung (3) versehen. Die inneren Begrenzungsflächen bzw. die Seitenwände des Schlitzes sind zum Verrasten des Halteabschnitts (5) in einer Rastposition ausgebildet. Zu diesem Zweck ist ein vorzugsweise federndes Rastelement (7) vorgesehen, das an einer Vertiefung oder an einer Erhöhung (20, 20') einrastbar ist. Das Modul kann mit einer derartigen Halterung einfach und platzsparend auf einer Platine (16) oder dergleichen fixiert werden, wobei zum Anheben und/oder Schwenken lediglich eine Lösung der Verrastung und keine vollständige Trennung von der Halterung nötig ist.

## Beschreibung

Die Erfindung betrifft ein optisches oder elektrisches Modul, insbesondere Buchsenteil für eine Steckverbindung gemäss dem Oberbegriff von Anspruch 1. Mit Hilfe einer lösbaren Halterung kann dabei das Modul auf einer Trägerplatte, beispielsweise auf einer gedruckten Schaltung oder dergleichen befestigt werden. Insbesondere Buchsenteile für eine Lichtwellenleiter-Steckverbindung sind hochpräzise Bauteile, die leicht austauschbar sein müssen.

Es sind bereits Module bekannt, die von der Halterung gehäuseartig umschlossen werden, wobei Stützschultern oder dergleichen auf der Aussenseite des Moduls dafür sorgen, dass keine unbeabsichtigte Verschiebung in der Halterung möglich ist. Ein gattungsmässig vergleichbares Modul und eine dazugehörige Halterung ist beispielsweise durch die DE U 297 08 275 bekannt geworden. Ein Problem bei diesem bekannten Modul besteht darin, dass das Trennen von der Halterung mit einigem Aufwand verbunden ist. Ausserdem kann das Modul nur in seiner Längsrichtung aus der Halterung gelöst werden, was je nach Anwendungsfall ohne Ausbau der Halterung gar nicht möglich ist. Schliesslich wäre es zweckmässig, wenn das Modul zum Einstecken eines Steckers vorübergehend geschwenkt werden könnte, was bei den bekannten Modulen ebenfalls unmöglich ist.

Es ist daher eine Aufgabe der Erfindung, ein Modul der eingangs genannten Art zu schaffen, das auf einfache Weise in einer Halterung fixiert werden kann und bei dem ein Lösen aus der Halterung ohne Werkzeuge möglich ist. Das Modul soll auch in einer Richtung quer zu seiner Längsrichtung mit der Halterung zusammengeführt werden können, und es soll eine vorübergehende Änderung der Relativlage, insbesondere ein Schwenken des Moduls, ohne vollständige Lösung von der Halterung ermöglicht werden. Diese Aufgabe wird erfindungsgemäss mit einem Modul gelöst, das die Merkmale im Anspruch 1 aufweist.

Der auf zwei Gehäuseseiten offene Schlitz zur Aufnahme eines flächigen Halteabschnitts an der Halterung erlaubt ein besonders einfaches Zusammenführen von Modul und Halterung und eine besonders verwindungssteife Fixierung. Die Verrastung erfolgt nicht auf der Gehäuseaussenseite, sondern innerhalb des Schlitzes. Erst beim Erreichen der Rastposition ist das Modul endgültig fixiert, während vorher Schwenk- und Schiebebewegungen möglich sind, obwohl bereits eine Vorpositionierung durch den flächigen Halteabschnitt erfolgt.

Besonders vorteilhaft weist wenigstens eine Innenwand des Schlitzes eine Vertiefung oder eine Erhöhung zum Einrasten eines Rastelements am Halteabschnitt auf.

Weitere Vorteile können erzielt werden, wenn der Schlitz einen Einführungsabschnitt und einen bezogen auf den Einführungsabschnitt längeren Schiebeabschnitt aufweist, wobei die Länge des Einführungsabschnitts eine Einführung des Halteabschnitts in den Schlitz in wenigstens einer Relativlage und die Länge des Schiebeabschnitts eine laterale Verschiebung des Halteabschnitts bis zum Erreichen der Rastposition ermöglicht. Durch diese Konfiguration kann die Rastposition in einer Bewegung angefahren werden, welche nicht linear verläuft. Zum vollständigen Einführen bzw. zum vollständigen Entfernen des Halteabschnitts müssen verschiedene zusammengesetzte Bewegungen ausgeführt werden. Dies ermöglicht eine mechanische Entkoppelung von der Halterung, also ein Verlassen der Rastposition, ohne dass dabei gleich das Modul vollständig von der Halterung entfernt wird.

Der Schlitz kann zudem einen Lagerabschnitt aufweisen, der zusammen mit einer Gelenknase am Halteabschnitt ein Gelenklager zum Schwenken des Gehäuses in der Ebene des Schlitzes bei ausgerastetem Halteabschnitt bildet. Bei feststehender Halterung kann damit das Modul auf einfache Weise geschwenkt werden, was beispielsweise das Einstecken eines Steckers unter einem bestimmten Winkel zur Platine ermöglicht.

Das Gehäuse des Moduls kann für ein Buchsenteil mit zwei parallelen Buchsen ausgebildet sein, wobei der Schlitz zwischen den Buchsen angeordnet ist. Der Schlitz ist auf diese Weise platzsparend untergebracht und das Modul ist trotzdem von allen Seiten her gut zugänglich. Selbstverständlich könnte der Schlitz aber auch in einem seitlichen Bereich am Modul angeordnet sein und an Stelle eines Duplex-Buchsenteils könnte es sich auch um ein Buchsenteil mit nur einer Buchse oder mit mehr als zwei Buchsen handeln.

Die Erfindung betrifft auch eine Halterung zum Befestigen eines eingangs beschriebenen optischen oder elektrischen Moduls, das gekennzeichnet ist durch die Merkmale im Anspruch 6. Demnach besteht die Halterung aus einem Sockelteil zum Befestigen auf einer Platine oder dergleichen, sowie aus einem flächigen Halteabschnitt, der durch den Schlitz im Modul schiebbar ist und der wenigstens ein Rastelement zum Verrasten des Halteabschnitts in einer Rastposition aufweist.

Das Sockelteil kann seinerseits Schnappfüsse zum Einrasten aufweisen und ist damit besonders einfach zu montieren. Denkbar ist aber auch, dass das Sockelteil mit Lötfüssen versehen ist, an denen es mit einer Unterlage verlötbar ist.

Das Rastelement am Halteabschnitt ist vorzugsweise als federnde Rastzunge ausgebildet, welche an einer Vertiefung oder an einer Erhöhung auf einer Innenwand des Schlitzes einrastbar ist. Das Ende der Rastzunge kann dabei als Griffstück ausgebildet sein, das aus dem Schlitz am Modul hinausragt. Auf diese Weise lässt sich die Rastzunge leicht mit einem Finger betätigen, um die Verrastung zu lösen.

Am Halteabschnitt kann ausserdem eine Stütznase angeordnet sein, welche sich in der Rastposition am Modul abstützt und dieses sichert. Die Verrastung mit Hilfe des Rastelements sichert somit das Modul nur in einer Bewegungsrichtung, während eine zweite theoretisch mögliche Bewegungsrichtung mittels der Stütznase gesichert wird.

Eine Gelenknase am Halteabschnitt bildet zusammen mit einem Lagerabschnitt im Schlitz ein Gelenklager zum Schwenken des Moduls in der Ebene des Schlitzes bei ausgerastetem Halteabschnitt. Auf diese Weise entsteht eine Gelenkfunktion ohne eigentliche Schwenkachse, welche die Bauteile durchdringt. Das Modul dreht sich an der Gelenknase um einen virtuellen Gelenkpunkt.

Der Halteabschnitt kann eine etwa T-förmige Konfiguration aufweisen, wobei der eine T-Schenkel die Stütznase und der andere T-Schenkel die Gelenknase bildet und wobei die Rastzunge dazwischen angeordnet ist. Dies ergibt eine besonders vorteilhafte funktionale Aufteilung am Halteabschnitt. Die Rastzunge kann zudem noch eine Aussparung aufweisen, welche zur Begrenzung der Bewegungsfreiheit zwischen Modul und Halterung bei ausgerastetem Halteabschnitt mit einer Erhöhung an der Innenwand des Schlitzes zusammenwirkt. Auf diese Weise kann insbesondere die Schwenkbewegung des Moduls auf einen bestimmten Winkel begrenzt werden.

Die Halterung kann besonders einfach und preiswert als Biegeteil aus Metall einstückig ausgebildet sein. Halterungen aus Kunststoffmaterial oder zusammengesetzte Halterungen sind je nach Einzelfall aber ebenfalls denkbar.

Weitere Einzelmerkmale und Vorteile der Erfindung ergeben sich aus der nachfolgenden Beschreibung eines Ausführungsbeispiels und aus den Zeichnungen. Es zeigen:
- Figur 1: eine perspektivische Darstellung eines erfindungsgemässen Moduls mit Halterung für eine Lichtwellenleiter-Steckverbindung,
- Figur 2: eine perspektivische Darstellung von schräg unten auf das Modul gemäss Figur 1,
- Figur 3: ein Querschnitt durch das Modul gemäss Figur 1 in perspektivischer Darstellung und ohne Halterung,
- Figur 4: eine perspektivische Darstellung einer Halterung,
- Figuren 5 bis 8: verschiedene Sequenzen des Einführens einer Halterung in das Modul bis zum Erreichen der Rastposition in Seitenansicht,
- Figur 9: das Modul gemäss Figur 3 mit eingerasteter Halterung,
- Figur 10: das Modul gemäss Figur 9 nach dem Lösen der Verrastung,
- Figur 11: eine Seitenansicht des Moduls gemäss Figur 9 in einem Gerät eingebaut,
- Figur 12: das Modul gemäss Figur 10 beim Erreichen der Schwenkposition,
- Figur 13: das Modul gemäss Figur 11 beim Erreichen der Schwenkposition,
- Figur 14: das Modul gemäss Figur 13 beim Beginn der Schwenkbewegung,
- Figur 15: das Modul gemäss Figur 12 beim Erreichen der maximalen Schwenkposition, und
- Figur 16: das Modul gemäss Figur 14 beim Erreichen der maximalen Schwenkposition.

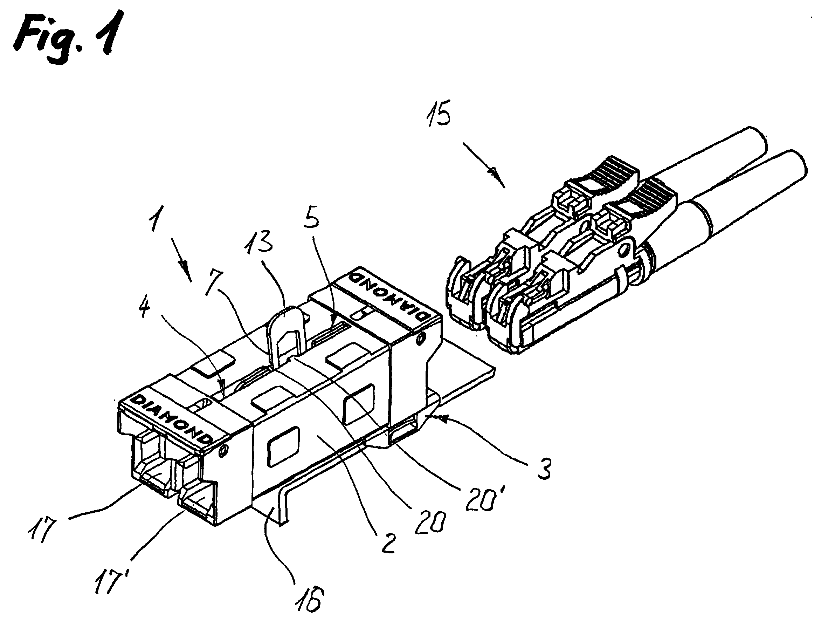

Wie beispielsweise in Figur 1 dargestellt, ist ein Modul 1 als Duplexhülse für eine Lichtwellenleiter-Steckverbindung ausgebildet. Das Modul verfügt an beiden Stirnseiten über je zwei Buchsenöffnungen 17, 17', in welche ein Duplexstecker 15 eingesteckt werden kann. Das Modul verfügt über ein Gehäuse 2 beispielsweise aus Kunststoffmaterial, das in der Mitte zwischen den hier nicht sichtbaren Buchsen mit einem durchgehenden Schlitz 4 versehen ist. Dieser Schlitz dient der Aufnahme eines flächigen Halteabschnitts 5, der Bestandteil einer insgesamt mit 3 bezeichneten Halterung ist. Mittels dieser Halterung kann das Modul 1 beispielsweise auf einer Platine 16 befestigt werden.

Der Halteabschnitt 5 lässt sich auf nachstehend noch genauer beschriebene Art und Weise im Schlitz 4 beim Erreichen einer Rastposition verrasten, wozu am Halteabschnitt ein Rastelement 7 und im Schlitz wenigstens eine Rippe 20 vorgesehen ist. Anstelle der vorstehenden Rippe wäre auch eine Vertiefung denkbar. Wie dargestellt, ist an der gegenüberliegenden Seitenwand des Schlitzes ebenfalls eine Rippe 20' vorgesehen, so dass ein Verrasten auch in einer um 180° gedrehten Position des Moduls 1 möglich wäre.

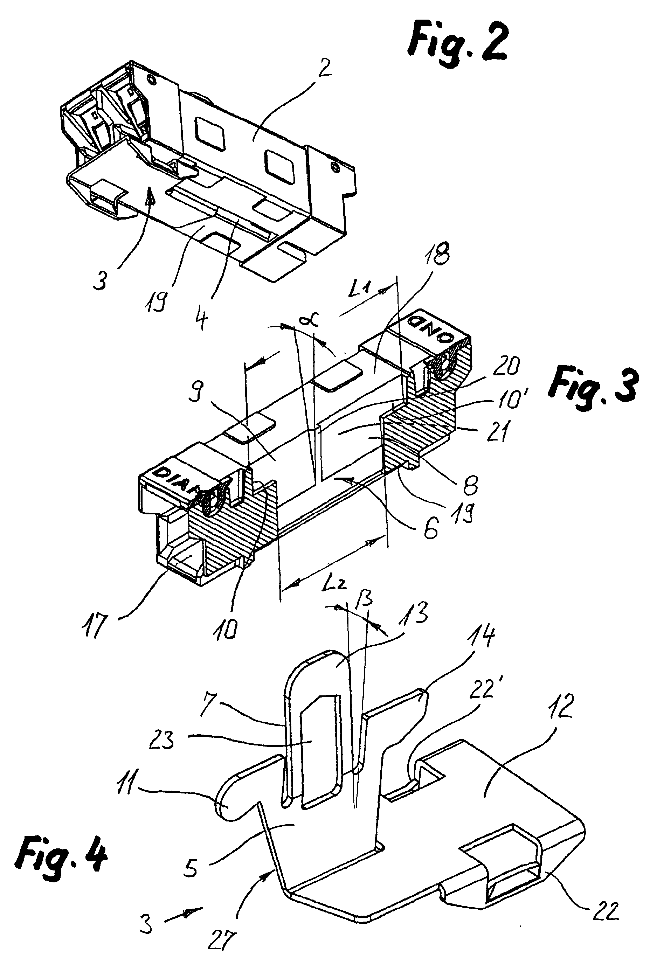

Figur 2 zeigt das mit der Halterung verbundene Modul von unten, wobei deutlich sichtbar ist, dass der Schlitz 4 auf der Gehäuseunterseite 19 aus dem Gehäuse 2 austritt, um den Halteabschnitt 5 aufnehmen zu können.

Weitere Einzelheiten der Ausbildung des Schlitzes 4 bzw. der inneren Seitenwände des Schlitzes können Figur 3 entnommen werden. Der Schlitz erstreckt sich durchgehend von der Gehäuseunterseite 19 bis zur Gehäuseoberseite 18. Er ist jedoch unterteilt in einen Einführungsabschnitt 8 mit einer Schlitzlänge L2 und in einen Schiebeabschnitt 9 mit einer Schlitzlänge L2. Die Schlitzlänge L2 ist so dimensioniert, dass der Halteabschnitt 5 einer Halterung 3 (Figur 4) in einer bestimmten Relativlage gerade noch eingeschoben werden kann, welche jedoch nicht mit der Relativlage beim Erreichen der Rastposition übereinstimmt. Dagegen erlaubt die Schlitzlänge L1 eine laterale Verschiebung in Längsrichtung der Buchse bis zum Erreichen der Rastposition bzw. in entgegengesetzte Richtung.

Die Seitenwand 6 des Schlitzes 4 weist eine Anschrägung 21 auf, welche unter einem Winkel α zur Vertikalen geneigt ist. Die vertikal verlaufende Rippe 20 ist als Aussparung von der Anschrägung gebildet. Die gegenüberliegende Seitenwand des Schlitzes ist spiegelsymmetrisch ausgebildet und ebenfalls mit einer Rippe 20' versehen (Figur 1). Der Übergang vom längeren Schiebeabschnitt 9 zum kürzeren Einführungsabschnitt 8 ist als Lagerabschnitt 10, 10' ausgebildet, der je nach Seitenlage der eingeführten Halterung 3 als Gelenkpfanne für eine Schwenkbewegung oder als Stützschulter zum Niederhalten des Moduls dient.

Figur 4 zeigt eine Halterung 3, die in das Modul gemäss Figur 3 eingeführt werden kann. Die Halterung besteht im wesentlichen aus einem flächigen Halteabschnitt 5 und aus einem Sockelteil 12. Am Sockelteil sind seitliche Schnappfüsse 22, 22' angeordnet, an denen die Halterung auf eine Platine oder dergleichen aufgeschnappt werden kann.

Der Halteabschnitt 5 hat eine etwa T-förmige Konfiguration und besteht im wesentlichen aus drei Elementen. Auf einer Seite ist eine abgerundete Gelenknase 11 angeordnet, welche zusammen mit einem Lagerabschnitt 10, 10' ein Drehgelenk mit einer virtuellen Schwenkachse bildet. Auf der gegenüberliegenden Seite aber auf der gleichen Höhe relativ zum Sockelteil 12 ist eine Stütznase 14 angeordnet, welche auf der unteren Seite lediglich angeschrägt ist und welche ebenfalls in einen Lagerabschnitt 10, 10' passt. Zwischen der Gelenknase 11 und der Stütznase 14 und abgesetzt von diesen, ist eine Rastzunge 7 angeordnet. Die Rastzunge ist unter einem Winkel β zum restlichen Halteabschnitt 5 geneigt, wobei dieser Neigungswinkel etwa identisch ist mit demjenigen an der Anschrägung 21 am Modul. Die Rastzunge erstreckt sich in der Höhe über die Gelenknase und die Stütznase hinaus und ihr Ende ist als Griffstück 13 ausgebildet. Die Materialeigenschaften sind so beschaffen, dass die Rastzunge 7 federnd ausgebildet ist und von der Grundposition in die vertikale Ebene des Halteabschnitts 5 ausgelenkt werden kann. Schliesslich ist die Rastzunge 7 auch noch mit einer Aussparung 23 versehen, welche so dimensioniert ist, dass sie die Rippe 20 bzw. 20' am Modul aufnehmen kann. Die Vorderkante 27 unter der Gelenknase 11 ist schräg ausgebildet, so dass sich der Halteabschnitt 5 gegen das Sockelteil 12 hin verjüngt.

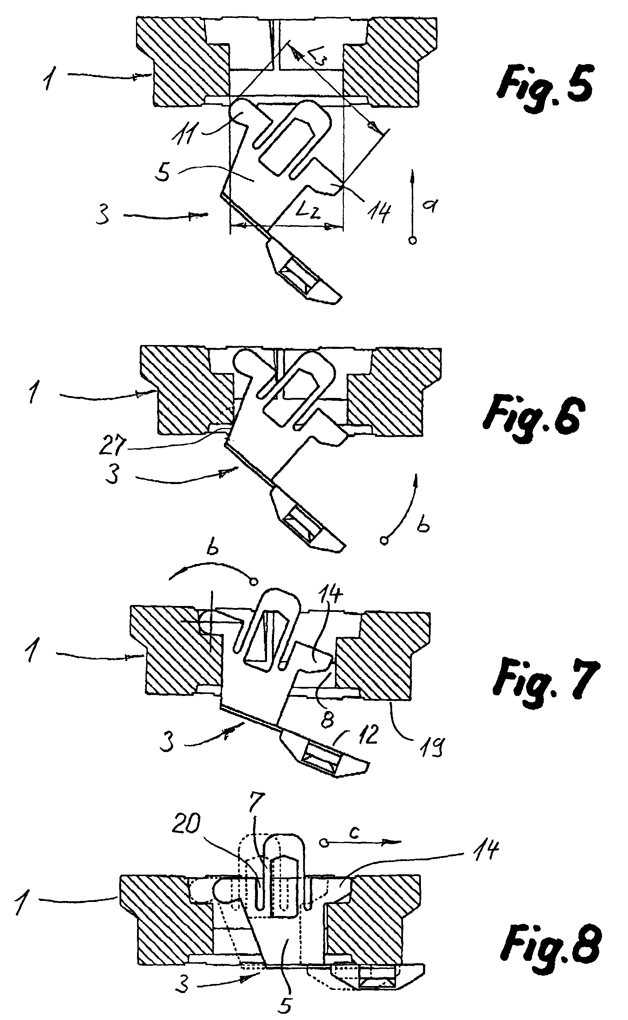

In den Figuren 5 bis 8 ist in verschiedenen Sequenzen dargestellt, wie die Halterung 3 in das Modul 1 eingeführt und verrastet wird. Gemäss Figur 5 muss die Halterung so weit relativ zum Modul 1 verdreht werden, dass der Halteabschnitt 5 in den Schlitz 4 in Pfeilrichtung a eingeschoben werden kann. Die Gesamtlänge L3 zwischen der Gelenknase 11 und der Stütznase 14 ist grösser als die Länge L2 am Einführungsabschnitt 8, woraus sich ersichtlicherweise eine geometrische Beziehung und eine bestimmte Winkellage der Halterung 3 ergibt.

Aus Figur 6 ist ersichtlich, dass die lineare Bewegung in eine Schwenkbewegung b übergeht, sobald die Vorderkante 27 die Innenkante des Schlitzes erreicht. Die Schwenkbewegung b wird gemäss Figur 7 solange fortgesetzt, bis auch die Stütznase 14 den Einführungsabschnitt 8 ganz durchlaufen hat und bis das Sockelteil 12 parallel zur Gehäuseunterseite 19 verläuft bzw. an dieser anliegt.

Diese Position ist in Figur 8 mit unterbrochenen Linien dargestellt. Der Halteabschnitt 5 hat dabei aber noch nicht seine Rastposition erreicht. Dazu ist eine weitere laterale Verschiebung in Pfeilrichtung c erforderlich, wobei einerseits die Stütznase 14 im Schiebeabschnitt bis zum Lagerabschnitt 10' verschoben wird. Anderseits rastet in dieser Position aber auch die Rastzunge 7 hinter der Rippe 20 ein, so dass eine Verschiebung in die Gegenrichtung nicht mehr möglich ist. Die Stütznase 14 stützt sich am Lagerabschnitt 10' ab, so dass auch ein vertikales Anheben oder eine Schwenkbewegung des Moduls 1 relativ zur Halterung 3 nicht mehr möglich ist.

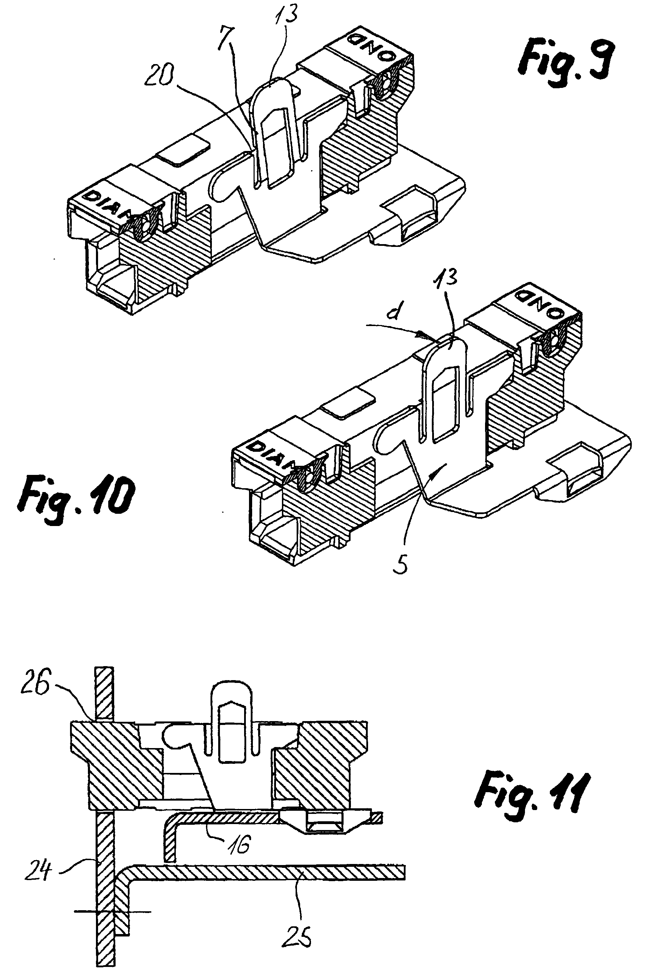

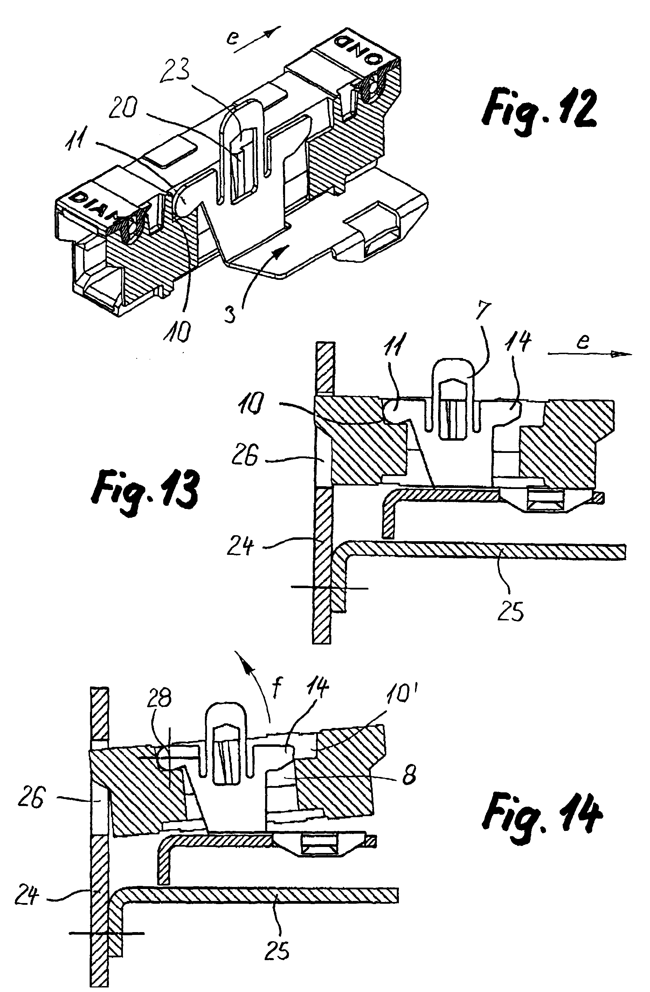

Die nachfolgenden Figuren 9 bis 16 zeigen in verschiedenen Sequenzen ein Schwenken des Moduls relativ zur Halterung, wobei die Figuren 11, 13, 14 und 16 jeweils die Situation an einem Einbaubeispiel verdeutlichen.

Figur 9 zeigt nochmals perspektivisch die Rastposition, wie sie auch in Figur 8 dargestellt ist. Deutlich ist hier sichtbar, wie die Rippe 20 vor der Rastzunge 7 liegt und eine laterale Verschiebung verhindert. Zum Lösen der Verrastung muss gemäss Figur 10 die Rastzunge 7 an dem aus dem Schlitz ragenden Griffstück 13 in Pfeilrichtung d zurückgefedert werden, bis die Rastzunge in der gleichen vertikalen Ebene liegt wie der restliche Halteabschnitt 5. In dieser Position ist eine laterale Verschiebung möglich.

Figur 11 zeigt das Modul 1 in einem Gerät eingebaut, das eine Frontplatte 24 und einen Gehäuseboden 25 aufweist. Auf dem Gehäuseboden ist eine abgewinkelte Platine 16 befestigt, auf welcher die Halterung aufgeschnappt ist. Eine Seite des Buchsenteils ragt in eine Öffnung 26 an der Frontplatte 24. In dieser Position ist das Einstecken eines Steckers auf der Geräteinnenseite relativ schwierig, so dass das Modul ohne vollständige Ablösung von der Halterung gekippt werden muss. Dieser Vorgang wird in den folgenden Figuren beschrieben. Gemäss den Figuren 12 und 13 wird das ausgerastete Modul in Pfeilrichtung e relativ zur Halterung 3 zurückgeschoben, bis die Gelenknase 11 die Endposition im Lagerabschnitt 10 erreicht hat. Die Rastzunge 7 ist jetzt wieder in die Schräglage zurückgefedert, wobei die Rippe 20 in die Aussparung 23 hineinragt. Die Position der Buchse relativ zur Frontplatte 24 ist derart, dass ein Abdrehen in der Öffnung 26 möglich ist.

Figur 14 zeigt den Beginn der Schwenkbewegung in Pfeilrichtung f, um eine virtuelle Gelenkachse 28. Die Stütznase 14 ist ganz aus dem Lagerabschnitt 10' ausgefahren und die Anschrägung erleichtert ein kollisionsfreies Eintauchen in den Einführungsabschnitt 8.

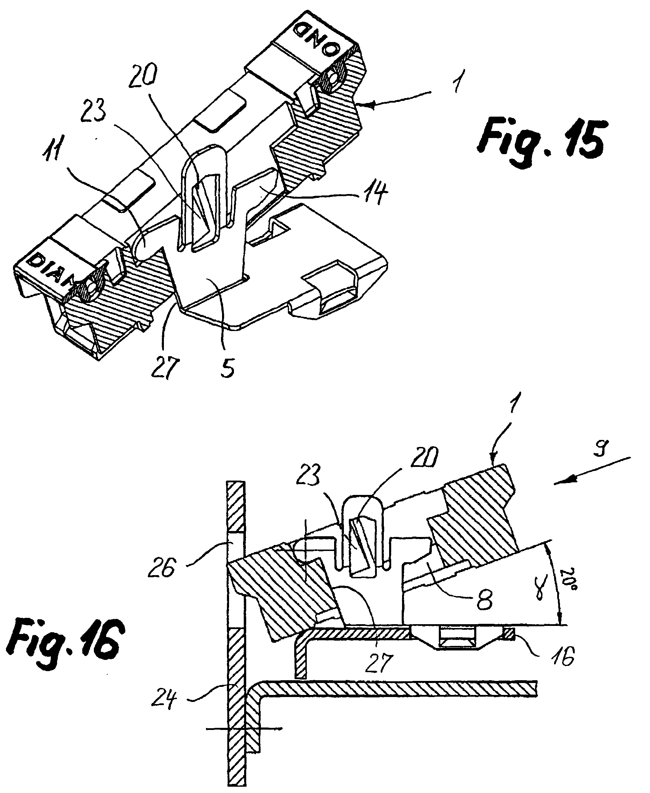

Die Figuren 15 und 16 zeigen die Endposition der Schwenkbewegung, in welcher das Modul 1 unter einem Schwenkwinkel γ von beispielsweise 20° zur Platine 16 geneigt ist. In dieser Schräglage ist das Modul wesentlich leichter zugänglich und es kann von der Gehäuseinnenseite her in Pfeilrichtung g ein Stecker eingesteckt werden. Die Endposition wird einerseits begrenzt durch die Rippe 20, welche an der Innenkante der Aussparung 23 in einem stumpfwinklig ausgebildeten oberen Bereich anliegt, anderseits aber auch durch die Vorderkante 27, welche im Bereich des Einführungsabschnitts 8 an der Stirnseite des Schlitzes ansteht. Andere Begrenzungsmittel wie Nocken usw. wären ebenfalls denkbar.

Nach dem Einstecken des Steckers wird der ganze Bewegungsvorgang reversiert, bis wiederum die Rastposition gemäss Figur 9 erreicht ist. Selbstverständlich muss es sich beim Modul nicht zwingend um eine Durchführungskupplung für zwei Stecker handeln. Es wäre auch ohne weiteres denkbar, dass das Modul beispielsweise ein optisches Sender- oder Empfängerelement enthält, das einseitig an einen Stecker angekoppelt wird.

Beim Modul könnte es sich auch um ein elektrisches Modul oder um ein kombiniertes elektro-optisches Modul handeln.

## Patentansprüche

1. Optisches oder elektrisches Modul (1), insbesondere Buchsenteil für eine Steckverbindung, mit einem Gehäuse (2), an dem Mittel für die lösbare Befestigung einer Halterung (3) angeordnet sind, dadurch gekennzeichnet, dass die Mittel wenigstens einen auf zwei Gehäuseseiten offenen Schlitz (4) zur Aufnahme eines flächigen Halteabschnitts (5) der Halterung (3) aufweisen und dass die inneren Begrenzungsflächen des Schlitzes zum Verrasten des Halteabschnitts in einer Rastposition ausgebildet sind.

2. Modul nach Anspruch 1, dadurch gekennzeichnet, dass eine Innenwand (6) des Schlitzes (4) eine Vertiefung oder eine Erhöhung (20) zum Einrasten eines Rastelements (7) am Halteabschnitt (5) aufweist.

3. Modul nach Anspruch 1 oder 2, dadurch gekennzeichnet, dass der Schlitz (4) einen Einführungsabschnitt (8) und einen bezogen auf den Einführungsabschnitt längeren Schiebeabschnitt (9) aufweist, wobei die Länge (L2) des Einführungsabschnitts eine Einführung des Halteabschnitts (5) in den Schlitz (4) in wenigstens einer Relativlage und die Länge (L1) des Schiebeabschnitts eine laterale Verschiebung des Halteabschnitts bis zum Erreichen der Rastposition ermöglicht.

4. Modul nach einem der Ansprüche 1 bis 3, dadurch gekennzeichnet, dass der Schlitz (4) einen Lagerabschnitt (10) aufweist, der zusammen mit einer Gelenknase (11) am Halteabschnitt (5) ein Gelenklager zum Schwenken des Gehäuses (2) in der Ebene des Schlitzes bei ausgerastetem Halteabschnitt bildet.

5. Modul nach einem der Ansprüche 1 bis 4, dadurch gekennzeichnet, dass das Gehäuse (2) für ein Buchsenteil mit zwei parallelen Buchsen ausgebildet ist und dass der Schlitz (4) zwischen den Buchsen angeordnet ist.

6. Halterung zum Befestigen eines optischen oder elektrischen Moduls, insbesondere nach einem der Ansprüche 1 bis 5, gekennzeichnet durch ein Sockelteil (12) zum Befestigen der Halterung (3) auf einer Platine (16) oder dergleichen, sowie durch einen flächigen Halteabschnitt (5), der durch einen Schlitz (4) im Modul schiebbar ist und der wenigstens ein Rastelement (7) zum Verrasten des Halteabschnitts in einer Rastposition aufweist.

7. Halterung nach Anspruch 6, dadurch gekennzeichnet, dass das Rastelement (7) eine federnde Rastzunge ist, welche an einer Vertiefung oder an einer Erhöhung auf einer Innenwand (6) des Schlitzes einrastbar ist.

8. Halterung nach Anspruch 7, dadurch gekennzeichnet, dass das Ende der Rastzunge als Griffstück (13) ausgebildet ist, das aus dem Schlitz (4) am Modul hinausragt.

9. Halterung nach einem der Ansprüche 6 bis 8, dadurch gekennzeichnet, dass am Halteabschnitt (5) eine Stütznase (14) angeordnet ist, welche sich in der Rastposition am Modul abstützt und dieses sichert.

10. Halterung nach einem der Ansprüche 6 bis 9, dadurch gekennzeichnet, dass am Halteabschnitt (5) eine Gelenknase (11) angeordnet ist, welche zusammen mit einem Lagerabschnitt (10) im Schlitz (4) ein Gelenklager zum Schwenken des Moduls in der Ebene des Schlitzes bei ausgerastetem Halteabschnitt bildet.

11. Halterung nach Anspruch 7, 9 und 10, dadurch gekennzeichnet, dass der Halteabschnitt (5) eine etwa T-förmige Konfiguration aufweist, wobei der eine T-Schenkel die Stütznase (14) und der andere T-Schenkel die Gelenknase (11) bildet, und dass die Rastzunge (7) dazwischen angeordnet ist.

12. Halterung nach einem der Ansprüche 7, 8 oder 11, dadurch gekennzeichnet, dass die Rastzunge eine Aussparung (23) aufweist, welche zur Begrenzung der Bewegungsfreiheit, insbesondere des Schwenkwinkels, zwischen Modul (1) und Halterung (3) bei ausgerastetem Halteabschnitt (5) mit einer Erhöhung (20) an der Innenwand (6) des Schlitzes (4) zusammenwirkt.

13. Halterung nach einem der Ansprüche 6 bis 11, dadurch gekennzeichnet, dass das Sockelteil (12) Schnappfüsse (22) zum Einrasten in einer Platine oder dergleichen aufweist.

14. Halterung nach einem der Ansprüche 6 bis 13, dadurch gekennzeichnet, dass es als Biegeteil aus Metall einstückig ausgebildet ist.

15. Modul nach einem der Ansprüche 1 bis 5 mit einer Halterung nach einem der Ansprüche 6 bis 14.
